# EUROPEAN PATENT SPECIFICATION

(11) **EP 3 363 744 B1**
(45) Date of publication and mention of the grant of the patent: **27.07.2022**
(21) Application number: 17165426.2
(22) Date of filing: 07.04.2017
(51) Int. Cl.: B64G 1/64, G01B 11/26, B64G 4/00

(54) **CAPTURING SYSTEM, AEROSPACE VEHICLE, AND PLATE-LIKE BODY**
EINFANGSYSTEM, RAUMFAHRZEUG UND PLATTENARTIGER KÖRPER
SYSTÈME DE CAPTURE, VÉHICULE AÉROSPATIAL ET CORPS DE TYPE PLAQUE

(30) Priority: 15.02.2017 JP 2017025747
(43) Date of publication of application: 22.08.2018
(60) Divisional application: 20167231.8
(73) Proprietor: Astroscale Japan Inc., Tokyo 130-0013 (JP)
(72) Inventor: MAEDA, Ken, TOKYO, 130-0013 (JP); SETO, Yuki, TOKYO, 130-0013 (JP)
(74) Representative: Plasseraud IP

(56) References cited:
- US-A- 4 834 531
- US-A- 5 145 227
- US-A1- 2008 121 760
- US-A1- 2011 192 936
- US-B1- 7 515 257

## Description

### Background

### Field

The present invention relates to a capturing system comprising an aerospace vehicle, and a plate-like body.

### Description of Related Art

It is known that remains of space missions, such as artificial satellites which were launched in the past and either completed their missions or malfunctioned, fragments thereof, or the upper stage of a rocket, are currently present as space debris (hereinafter referred to as "debris") on orbit around the earth. Such debris may collide with and damage operational space stations and artificial satellites. Therefore, various techniques of deorbiting and burning the debris in the atmosphere or collecting the debris have been proposed.

For example, a technique has been proposed where, in order to attach a conductive tether device to debris and decelerate debris by an electromagnetic force acting on the tether, a mothership is brought close to debris, and debris is captured by a robot arm provided on the mothership (Japanese Patent Laid-Open No. 2004-98959). Moreover, in recent years, a technique has been proposed where, in order to release and deploy a tether in space, a mothership is brought close to debris, a harpoon that contains the tether is deployed from a debris capturing device provided on the mothership to the debris , and the harpoon penetrates into the debris (Japanese Patent Laid-Open No. 2016-68730).

However, in the capturing technique using the robot arm described in Japanese Patent Laid-Open No. 2004-98959, the robot arm has a complicated mechanism, and therefore, the mass and the size of the device increase so that the cost for development, manufacturing, or launch becomes very high. In the capturing technique using the harpoon described in Japanese Patent Laid-Open No. 2016-68730, a harpoon ejecting mechanism is required, which increases the cost. Furthermore, when the ejection of the harpoon has failed once, the ejection cannot be redone, and therefore, there is a possibility that the success rate of the mission decreases.

U.S. patent No. 5,145,227 A discloses an electromagnetic attachment mechanism.

U.S. patent application publication No. 2008/121760 A1 discloses a docking device.

U.S. patent application publication No. 2011/192936 A1 discloses a towing apparatus for a spacecraft when in orbit and a towing spacecraft.

U.S. patent No. 4,834,531 A discloses a dead reckoning optoelectronic intelligent docking system.

U.S. patent No. 7,515,257 B1 discloses a short-range/long range integrated target (SLIT) for video guidance sensor rendezvous and docking.

### Summary

The present invention has been made in view of such circumstances. The objective of the present invention is to increase the success rate of missions at a low cost for a capturing system which captures a target object in space.

In order to achieve the objective, a capturing system configured for capturing a target object in a space according to the present invention comprises: a plate-like body that is configured to be attached to the target object prior to being launched into space; and an aerospace vehicle comprising a magnetic force generating portion for generating magnetic force for attracting the plate-like body. The plate-like body comprises: a portion containing a magnetic material; and a marker for approach navigation of the aerospace vehicle. The marker comprises a material capable of reflecting light and is configured to reflect light emitted from the aerospace vehicle towards the aerospace vehicle. The aerospace vehicle comprises: a body; and a rod-shaped member projectably and retractably provided to the body. The rod-shaped member is configured to perform a reciprocating motion, and the magnetic force generating portion is attached to a tip of the rod-shaped member.

When such a configuration is employed, a target object in space can be captured by attaching a plate-like body, which is attracted with a magnetic force, to the target object prior to launch, and then attracting the plate-like body with magnetic force generated by the magnetic force generating portion of the aerospace vehicle. The plate-like body which is attached to the target object prior to launch has no electrical or mechanical structures, and the mechanism of the magnetic force generating portion of the aerospace vehicle is relatively simple. Therefore, the development or manufacturing cost can be markedly reduced.

The capturing system according to the present invention can employ a magnetic force generating portion that has a plate-like member and a magnetic portion placed on the surface of the plate-like member. Herein, two or more of the magnetic portions can be placed at a predetermined interval along the peripheral edge of the plate-like member.

As the magnetic portion, a permanent magnet can be employed. Thus, the magnetic force generating portion can be constructed for a relatively low cost. Moreover, an electromagnet that generates a magnetic force by applying an electric current may be employed as the magnetic portion. Thus, when the attraction between the magnetic force generating portion and the plate-like body is undesirable, for example, the electric current applied to the electromagnet is stopped to temporarily eliminate the magnetic force, whereby the undesired attraction can be resolved. Thereafter, by restarting the current application to the electromagnet as necessary, the attraction between the magnetic force generating portion and the plate-like body can be resumed.

The capturing system according to the present invention comprises an aerospace vehicle that has a body and a rod-shaped member that may be deployed and retracted from the body. In such a case, the magnetic force generating portion can be attached to the tip of the rod-shaped member.

In such a configuration the magnetic force generating portion is attached to the tip of the rod-shaped member that may be deployed and retracted from the body of the aerospace vehicle. Therefore, in capturing a target object, the rod-shaped member is deployed from the body of the aerospace vehicle to the plate-like body of the target object, so that the magnetic force generating portion can be brought close to the plate-like body. On the other hand, when the aerospace vehicle travels in space, the rod-shaped member can be retracted into the body. Therefore, interference between portions other than the plate-like body of the target object (e.g. antennas, nozzles, or solar cells) and the rod-shaped member can be prevented. Moreover, by first contacting the target object with the tip (i.e., the magnetic force generating portion) of the rod-shaped member placed on the aerospace vehicle, the load of the entire aerospace vehicle will be prevented from being applied on the target object. Therefore, the influence on the target object can be minimized.

In the capturing system according to the present invention, the plate-like body can have a portion containing magnetic materials, such as iron, nickel, permalloy, steel, and others.

According to the present invention, for the capturing system which captures a target object in space, such as debris, the success rate of a mission thereof can be increased at a low cost.
In the following, embodiments and/or examples not falling within the scope of the appended claims should be understood as mere examples useful for understanding the invention.

### Brief Description of Drawings

FIG. 1 is a configuration diagram that explains the entire configuration of a capturing system according to an embodiment of the present invention.
FIG. 2 is a plan view of a plate-like body that comprises the capturing system according to the embodiment of the present invention.
FIG. 3 is a structure diagram that explains the internal structure of the plate-like body illustrated in FIG. 2.
FIG. 4 is a perspective diagram of an aerospace vehicle comprising the capturing system according to the embodiment of the present invention.
FIG. 5 is a perspective diagram illustrating a state where a rod-shaped member of the aerospace vehicle illustrated in FIG. 4 is retracted into the body.
FIG. 6 is a front view of a magnetic force generating portion of the aerospace vehicle illustrated in FIG. 4.
FIG. 7 is a front view of one example modification to the magnetic force generating portion of the aerospace vehicle illustrated in FIG. 4.

### Detailed Description

Hereinafter, an embodiment of the present invention is described with reference to the drawings.

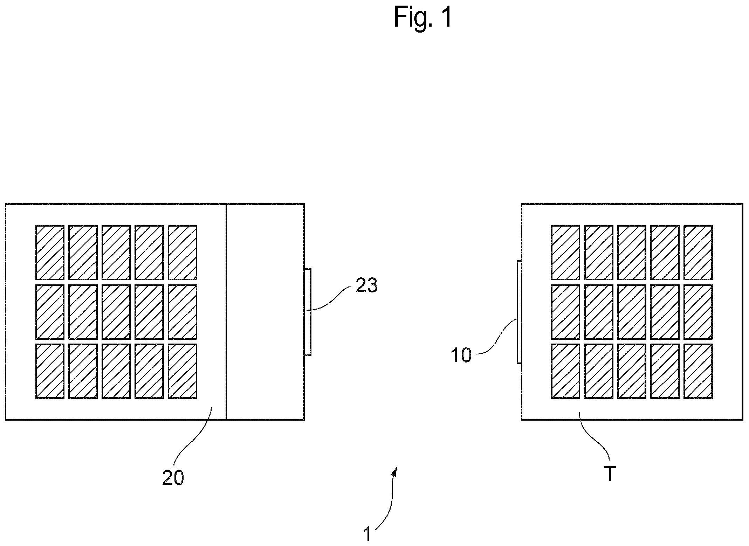

First, the configuration of a capturing system 1 according to the embodiment of the present invention is described with reference to FIG. 1 to FIG. 7.

The capturing system 1 according to this embodiment is one for capturing a target object (for example, debris) T in space, which has a plate-like body 10 attached to the target object T and an aerospace vehicle 20 having a magnetic force generating portion 23 (described later) generating magnetic a force that attracts the plate-like body 10, as illustrated in FIG. 1.

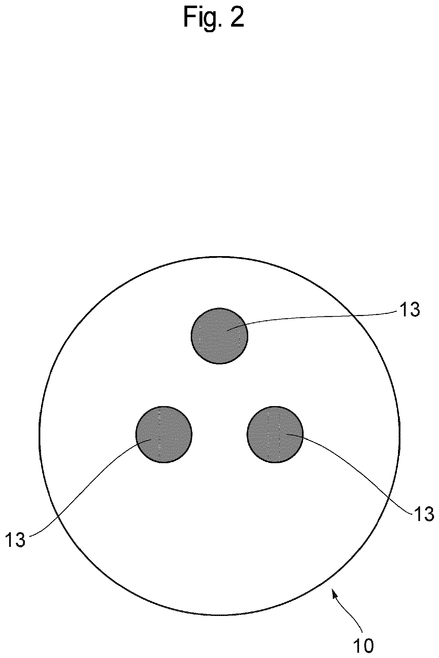

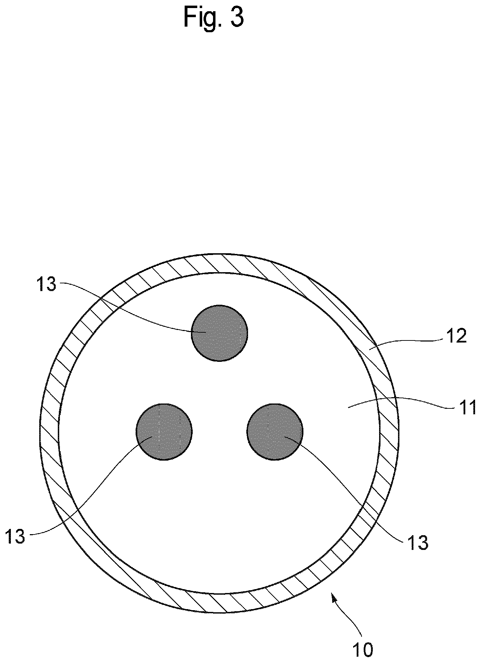

As illustrated in FIG. 2 and FIG. 3, the plate-like body 10 is a plate-like member having a circular shape as viewed in a plan view, has a predetermined thickness, and is attached prior to launch to a predetermined portion (for example, a flat portion) of the target object T.

The plate-like body 10 in this embodiment has a central portion 11 containing aluminum and a peripheral portion 12 containing iron, as illustrated in FIG. 3, and is configured so that the peripheral portion 12 containing iron, which is a magnetic material, is attracted to the magnetic force generating portion 23 of the aerospace vehicle 20. The peripheral portion 12 can also contain other magnetic materials (for example, nickel, permalloy, steel, etc.) in place of iron. Both the central portion 11 and the peripheral portion 12 may contain magnetic materials, such as iron. The area of the plate-like body 10 can be set to be roughly equal to (or slightly larger than) the area of the magnetic force generating portion 23 of the aerospace vehicle 20.

In the central portion 11 of the plate-like body 10, markers 13 can be placed for approach navigation of the aerospace vehicle 20. The markers 13 are configured in a certain geometric pattern. For example, three or more circles can be arranged in a predetermined pattern. The markers 13 contain materials (for example, glass beads, a mirror, etc.) capable of reflecting light emitted from the aerospace vehicle 20 towards the aerospace vehicle 20. In order to specify the position and the movement of the plate-like body 10, preferably at least three markers 13 are placed. Moreover, in order to prevent damage to the plate-like body 10 during magnetic attraction, specific surface processing can be applied to the plate-like body 10.

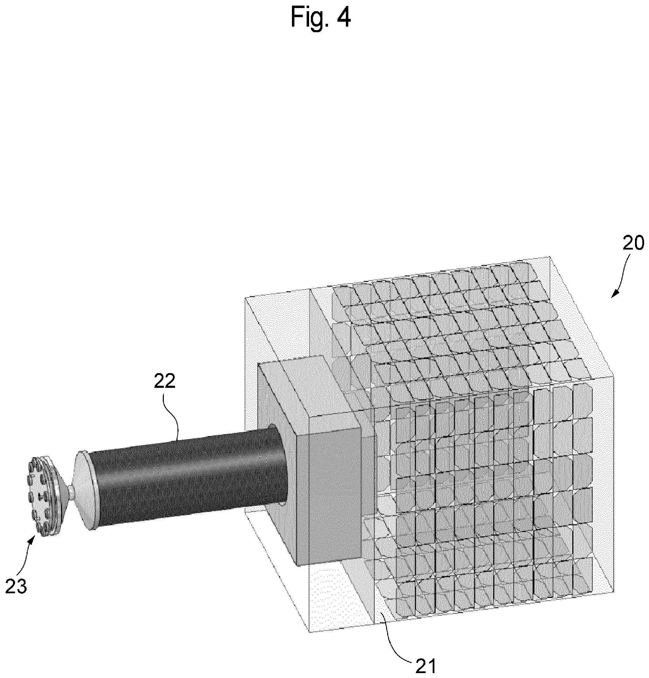

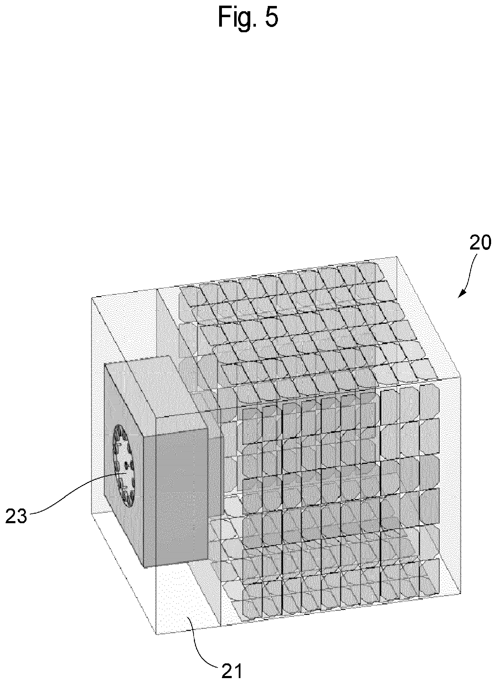

The aerospace vehicle 20 is configured so as to be attached to a rocket, launched into space, and then separated from the rocket to be able to autonomously move in space. The aerospace vehicle 20 has a body 21 with an approximately rectangular parallelepiped shape and a rod-shaped member 22 with an approximately cylindrical shape that is both deployable and retractable from the body 21, as illustrated in FIG. 4. When the aerospace vehicle 20 is launched or moves in space, the aerospace vehicle 20 is set to a state where the rod-shaped member 22 is retracted into the body 21 as illustrated in FIG. 5.

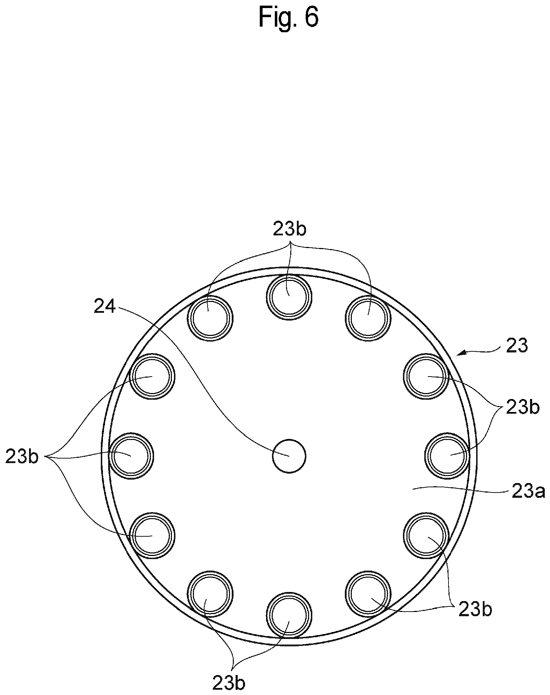

The magnetic force generating portion 23, which generates the magnetic force attracting the plate-like body 10 on the target object T, is attached to the tip of the rod-shaped member 22 of the aerospace vehicle 20. The magnetic force generating portion 23 has a plate-like member 23a with a circular shape as viewed in a plan view and magnetic portions 23b placed on the surface of the plate-like member 23a as illustrated in FIG. 6. In this embodiment, a permanent magnet having a circular shape as viewed in a plan view is employed as the magnetic portion 23b, and two or more of the permanent magnets are placed at a predetermined interval along the peripheral edge of the plate-like member 23a, as illustrated in FIG. 6. The magnetic force generated by the magnetic force generating portion 23 is set to a strength (for example, 4 N) with which the plate-like body 10 can be attracted.

The aerospace vehicle 20 can facilitate proximity navigation by recognizing the markers 13 or the like attached to the central portion of the plate-like body 10 with a camera 24 or the like of the aerospace vehicle 20, as illustrated in FIG. 6.

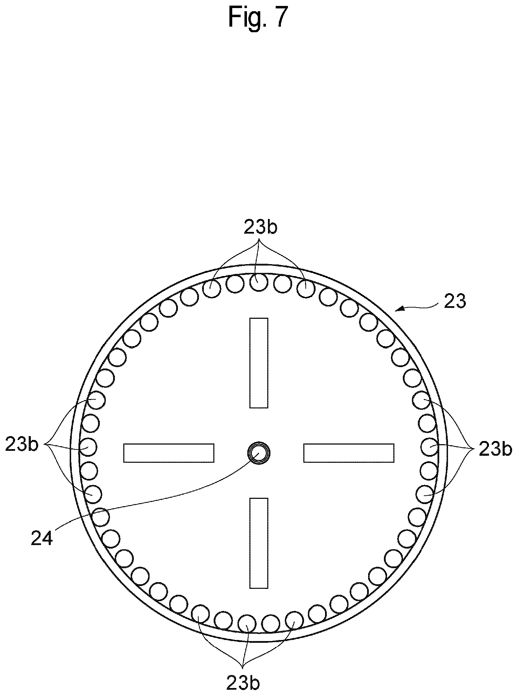

In the aerospace vehicle 20, the area of each magnetic portion 23b, the position and number of the magnetic portions 23b, and the like can be altered as appropriate. For example, instead of placing magnetic portions 23b having a relatively large area as illustrated in FIG. 6, a large number of magnetic portions 23b having a relatively small area can also be placed as illustrated in FIG. 7.

Next, a method for capturing the target object T using the capturing system 1 according to the embodiment of the present invention is described.

First, the aerospace vehicle 20 is moved towards the target object T. Herein, the aerospace vehicle 20 searches for the plate-like body 10 attached to the target object T while performing imaging with the camera 24. The search of the plate-like body 10 is completed by reflecting light emitted from a light projector off of the surface of the markers 13 attached to the surface of the plate-like body 10, capturing the light with the camera 24, and then recognizing the light with a computing device, for example. By recognizing the relative position and the relative attitude of the target object T from, for example, information obtained by recognizing the pattern of the markers 13 on the surface of the plate-like body 10, the aerospace vehicle 20 can move so as to approach the target object T.

Subsequently, when the distance between the target object T and the aerospace vehicle 20 reaches a value equal to or smaller than a predetermined value, the rod-shaped member 22 of the aerospace vehicle 20 is deployed from the body 21 to the plate-like body 10 of the target object T. Then, the plate-like body 10 attached to the target object T prior to launch is attracted with magnetic force generated by the magnetic force generating portion 23 attached to the tip of the rod-shaped member 22 of the aerospace vehicle 20. Then, the rod-shaped member 22 of the aerospace vehicle 20 is retracted toward the body 21, whereby the target object T is brought close to the aerospace vehicle 20 to be captured.

In the capturing system 1 according to the embodiment described above, the plate-like body 10 to be attracted with magnetic force is attached to the target object T in space prior to launch, and then the plate-like body 10 is attracted with magnetic force generated by the magnetic force generating portion 23 of the aerospace vehicle 20, whereby the target object T can be captured. The plate-like body 10 attached to the target object T prior to launch has no electrical and mechanical structures, and the mechanism of the magnetic force generating portion 23 of the aerospace vehicle 20 is also relatively simple. Therefore, the development and manufacturing cost can be markedly reduced.

In the capturing system 1 according to the embodiment described above, permanent magnets are employed as the magnetic portion 23b, and therefore, the magnetic force generating portion 23 can be constructed for a relatively low cost.

Moreover, in the capturing system 1 according to the embodiment described above, the magnetic force generating portion 23 is attached to the tip of the rod-shaped member 22 which may be deployed and retracted from the body 21 of the aerospace vehicle 20. Therefore, when capturing the target object T, the magnetic force generating portion 23 can be brought close to the plate-like body 10 by deploying the rod-shaped member 22 from the body 21 of the aerospace vehicle 20 to the plate-like body 10 of the target object T. On the other hand, when the aerospace vehicle 20 travels in the space, the rod-shaped member 22 can be retracted into the body 21. Therefore, interference between portions other than the plate-like body 10 of the target object T (e.g., antennas, nozzles, or solar cells) and the rod-shaped member 22 can be prevented. Moreover, by first contacting the target object T with the tip (i.e., magnetic force generating portion 23) of the rod-shaped member 22 placed on the aerospace vehicle 20, the load of the entire aerospace vehicle 20 will be prevented from being applied on the target object T. Therefore, the influence on the target object T can be minimized.

This embodiment describes an example in which a permanent magnet is employed as the magnetic portion 23b comprising the magnetic force generating portion 23, but an electromagnet that generates a magnetic force by applying a current can also be employed in place of the permanent magnet. Thus, when the attraction between the magnetic force generating portion 23 and the plate-like body 10 is undesirable, for example, the electric current applied to the electromagnet is stopped to temporarily eliminate the magnetic force, whereby the undesired attraction can be resolved. Thereafter, by restarting the current application to the electromagnet as necessary, the attraction between the magnetic force generating portion 23 and the plate-like body 10 can be resumed.

Moreover, by combining an electromagnet and a permanent magnet, the magnetic force of the permanent magnet can be eliminated by applying a current on the electromagnet. Thus, continuous power is not required in the attraction state and, when the attraction between the magnetic force generating portion 23 and the plate-like body 10 is undesirable, an appropriate electric current is applied to the electromagnet temporarily to eliminate the magnetic force, whereby the undesired attraction can be resolved. Thereafter, by restarting the nominal current application to the electromagnet as necessary, the attraction between the magnetic force generating portion 23 and the plate-like body 10 can be resumed.

Moreover, in this embodiment, the planar shape of the plate-like body 10 to be attached to the target object T is set to a circular shape, but the planar shape of the plate-like body 10 is not limited to a circular shape and may be polygonal (triangular, square, hexagonal, and the like), for example. The planar shape of the plate-like member 23a of the magnetic force generating portion 23 on the aerospace vehicle 20 is also not limited to a circular shape and can be set to a polygonal shape, for example. Moreover, the shape of the aerospace vehicle 20 is also not limited to an approximately rectangular parallelepiped shape and can be set to an approximately columnar shape, for example.

The present invention is not limited to the embodiment described above and embodiments obtained by adding design changes to the embodiment described above as appropriate by a person skilled in the art are also included in the scope of the present invention insofar as the embodiments have the features of the present invention, as defined by the appended claims. More specifically, the elements of the embodiment described above and the arrangement, materials, conditions, shapes, sizes, and the like thereof are not necessarily limited to those described as examples and can be altered as appropriate. Moreover, the elements of the embodiment described above can be combined as long as the combination is technically allowed and those obtained by combining the elements are also included in the scope of the present invention insofar as the combinations include the features of the present invention, as defined by the appended claims.

### [Description of Reference Numerals]

1⊕⊕⊕Capturing system
1⊕⊕⊕Plate-like body
11⊕⊕⊕Central portion
12⊕⊕⊕Peripheral portion (Portion containing magnetic materials)
13⊕⊕⊕Marker
20⊕⊕⊕ Aerospace vehicle
21⊕⊕⊕Body
22⊕⊕⊕ Rod-shaped member
23⊕⊕⊕Magnetic force generating portion
23a⊕⊕⊕Plate-like member
23b⊕⊕⊕Magnetic portion
24⊕⊕⊕Camera
T⊕⊕⊕Target object

## Claims

1. A capturing system (1), configured for capturing a target object (T) in a space, the capturing system comprising:
a plate-like body (10) that is configured to be attached to the target object (T) prior to being launched into space; and
an aerospace vehicle (20) comprising a magnetic force generating portion (23) for generating magnetic force for attracting the plate-like body (10),
wherein the plate-like body (10) comprises: a portion containing a magnetic material; and a marker (13) for approach navigation of the aerospace vehicle (20),
wherein the marker (13) comprises a material capable of reflecting light and is configured to reflect light emitted from the aerospace vehicle (20) towards the aerospace vehicle (20),
wherein the aerospace vehicle (20) comprises: a body (21); and a rod-shaped member (22) projectably and retractably provided to the body (21), wherein the rod-shaped member (22) is configured to perform a reciprocating motion, and
wherein the magnetic force generating portion (23) is attached to a tip of the rod-shaped member (22).

2. The capturing system (1) according to Claim 1, wherein the magnetic force generating portion (23) has a plate-like member (23a) and a magnetic portion (23b) placed on the surface of the plate-like member (23a).

3. The capturing system (1) according to Claim 2, wherein the magnetic portion (23b) is a permanent magnet.

4. The capturing system (1) according to Claim 2, wherein the magnetic portion (23b) is an electromagnet for generating magnetic force by applying a current.

5. The capturing system (1) according to any one of Claims 1 - 4, wherein the marker (13) comprises glass beads or a mirror.

6. The capturing system (1) according to any one of Claims 1 to 5, wherein at least three pieces of the marker (13) are provided.

7. The capturing system (1) according to any one of Claims 1 to 6, wherein the markers (13) are configured in a certain geometric pattern.

8. The capturing system (1) according to any one of Claims 1 to 7, wherein the markers (13) are a plurality of circles disposed with a predetermined pattern.

9. The capturing system (1) according to any one of Claims 1 to 8, wherein the plate-like body comprises a peripheral portion (12) and a central portion (11),
wherein the peripheral portion (12) contains the magnetic material, and the markers (13) are provided in the central portion (11).

10. The capturing system (1) according to any one of Claims 1 to 9, wherein the magnetic material is iron, nickel, permalloy, or steel.

## Patentansprüche

1. Einfangsystem (1), welches dazu eingerichtet ist, ein Zielobjekt (T) in einem Raum einzufangen, wobei das Einfangsystem umfasst:
einen plattenartigen Körper (10), welcher dazu eingerichtet ist, an dem Zielobjekt (T) angebracht zu sein, bevor es in den Weltraum gebracht wird; und
ein Raumfahrzeug (20), welches einen Magnetkraft-Erzeugungsabschnitt (23) zum Erzeugen einer magnetischen Kraft zum Anziehen des plattenartigen Körpers (10) umfasst,
wobei der plattenartige Körper (10) umfasst: einen Abschnitt, welcher ein magnetisches Material umfasst; und eine Markierung (13) für eine Annäherungsnavigation des Raumfahrzeugs (20),
wobei die Markierung (13) ein Material umfasst, welches dazu in der Lage ist, Licht zu reflektieren, und dazu eingerichtet ist, von dem Raumfahrzeug (20) emittiertes Licht in Richtung des Raumfahrzeugs (20) zu reflektieren,
wobei das Raumfahrzeug (20) umfasst: einen Körper (21); und ein stabförmiges Element (22), welches ausfahrbar und einziehbar an dem Körper (21) bereitgestellt ist, wobei das stabförmige Element (22) dazu eingerichtet ist, eine Hin-und her Bewegung durchzuführen, und
wobei der Magnetkraft-Erzeugungsabschnitt (23) an einer Spitze des stabförmigen Elements (22) angebracht ist.

2. Einfangsystem (1) nach Anspruch 1, wobei der Magnetkraft-Erzeugungsabschnitt (23) ein plattenförmiges Element (23a) und einen magnetischen Abschnitt (23b) aufweist, welcher an der Oberfläche des plattenartigen Elements (23a) platziert ist.

3. Einfangsystem (1) nach Anspruch 2, wobei der magnetische Abschnitt (23b) ein Permanentmagnet ist.

4. Einfangsystem (1) nach Anspruch 2, wobei der magnetische Abschnitt (23b) ein Elektromagnet zum Erzeugen einer magnetischen Kraft durch Anlegen eines Stroms ist.

5. Einfangsystem (1) nach einem der Ansprüche 1-4, wobei die Markierung (13) Glaskugeln oder einen Spiegel umfasst.

6. Einfangsystem (1) nach einem der Ansprüche 1 bis 5, wobei mindestens drei Stück der Markierung (13) bereitgestellt sind.

7. Einfangsystem (1) nach einem der Ansprüche 1 bis 6, wobei die Markierungen (13) in einem bestimmten geometrischen Muster eingerichtet sind.

8. Einfangsystem (1) nach einem der Ansprüche 1 bis 7, wobei die Markierungen (13) eine Mehrzahl von Kreisen sind, welche mit einem vorbestimmten Muster angeordnet sind.

9. Einfangsystem (1) nach einem der Ansprüche 1 bis 8, wobei der plattenartige Körper einen Umfangsabschnitt (12) und einen zentralen Abschnitt (11) umfasst,
wobei der Umfangsabschnitt (12) das magnetische Material enthält und die Markierungen (13) in dem zentralen Abschnitt (11) bereitgestellt sind.

10. Einfangsystemen (1) nach einem der Ansprüche 1 bis 9, wobei das magnetische Material Eisen, Nickel, Permalloy oder Stahl ist.

## Revendications

1. Système de capture (1), configuré pour capturer un objet cible (T) dans un espace, le système de capture comprenant :
un corps de type plaque (10) qui est configuré pour être fixé à l'objet cible (T) avant d'être lancé dans l'espace ; et
un véhicule aérospatial (20) comprenant une partie génératrice de force magnétique (23) pour générer une force magnétique pour attirer le corps de type plaque (10), dans lequel le corps de type plaque (10) comprend : une partie contenant un matériau magnétique ; et un marqueur (13) pour une navigation d'approche du véhicule aérospatial (20),
dans lequel le marqueur (13) comprend un matériau capable de réfléchir de la lumière et est configuré pour réfléchir de la lumière émise depuis le véhicule aérospatial (20) vers le véhicule aérospatial (20),
dans lequel le véhicule aérospatial (20) comprend : un corps (21) ; et un élément en forme de tige (22) prévu sur le corps (21) et pouvant être déployé et rétracté, dans lequel l'élément en forme de tige (22) est configuré pour effectuer un mouvement alternatif, et
dans lequel la partie génératrice de force magnétique (23) est fixée à une extrémité de l'élément en forme de tige (22).

2. Système de capture (1) selon la revendication 1, dans lequel la partie génératrice de force magnétique (23) présente un élément de type plaque (23a) et une partie magnétique (23b) placée sur la surface de l'élément de type plaque (23a).

3. Système de capture (1) selon la revendication 2, dans lequel la partie magnétique (23b) est un aimant permanent.

4. Système de capture (1) selon la revendication 2, dans lequel la partie magnétique (23b) est un électroaimant pour générer une force magnétique en appliquant un courant.

5. Système de capture (1) selon l'une quelconque des revendications 1 à 4, dans lequel le marqueur (13) comprend des billes de verre ou un miroir.

6. Système de capture (1) selon l'une quelconque des revendications 1 à 5, dans lequel au moins trois pièces du marqueur (13) sont prévues.

7. Système de capture (1) selon l'une quelconque des revendications 1 à 6, dans lequel les marqueurs (13) sont configurés selon un certain motif géométrique.

8. Système de capture (1) selon l'une quelconque des revendications 1 à 7, dans lequel les marqueurs (13) sont une pluralité de cercles disposés selon un motif prédéterminé.

9. Système de capture (1) selon l'une quelconque des revendications 1 à 8, dans lequel le corps de type plaque comprend une partie périphérique (12) et une partie centrale (11),
dans lequel la partie périphérique (12) contient le matériau magnétique, et les marqueurs (13) sont prévus dans la partie centrale (11).

10. Système de capture (1) selon l'une quelconque des revendications 1 à 9, dans lequel le matériau magnétique est du fer, du nickel, du permalloy ou de l'acier.
